# EUROPEAN PATENT SPECIFICATION

(11) **EP 2 537 731 B1**
(45) Date of publication and mention of the grant of the patent: **15.10.2014**
(21) Application number: 11290283.8
(22) Date of filing: 23.06.2011
(51) Int. Cl.: B61G 7/14, B61L 15/00, B61L 23/34, G01B 11/14, G05D 1/02, G08G 1/14

(54) **Apparatus for measuring a distance between two public transport vehicles**
Vorrichtung zum Messen einer Entfernung zwischen zwei öffentlichen Verkehrsmitteln
Appareil pour mesurer la distance entre deux véhicules de transport public

(43) Date of publication of application: 26.12.2012
(73) Proprietor: Siemens S.A.S., 93527 Saint-Denis Cedex 2 (FR); Siemens Aktiengesellschaft, 80333 München (DE)
(72) Inventor: Gimenez, Jean-Marie, 92100 Boulogne Billancourt (FR); Nogueira Alves, Clara, 92130 Issy Les Moulineaux (FR); Ernst, Horst, 38118 Braunschweig (DE)
(74) Representative: Maier, Daniel Oliver

(56) References cited:
- DE-A1-102009 033 980
- DE-U1-202006 012 637
- JP-A- 10 038 560
- JP-A- 2000 146 573
- US-A1- 2006 038 381
- US-A1- 2010 148 013

## Description

The invention relates to measure a distance between two public transport vehicles able to be mechanically coupled or uncoupled, especially by means of common video devices.

A coupling and uncoupling of public transport vehicles requires the knowledge of the distance between said vehicles and their associated coupling means. Especially by present communication based train control (CBTC) for which the support of an operator has to be avoided as far as possible, a coupling operation of approaching vehicles has to be secure and reliable. In order to determine the distance between train units before a coupling some devices are installed on-board of the train units, like telemeter or other similar echo based measuring apparatus. These means provide a single information on the distance without taking in account other potential environment parameters or technical deficiencies like an obstacle between vehicles, a lack of visibility, a deficiency of parts or processes during a coupling and uncoupling phase. Hence processes of coupling/uncoupling vehicles still remains no secure enough. As well by such fails there is no means for emitting an alarm in order to prevent from any potential damages.

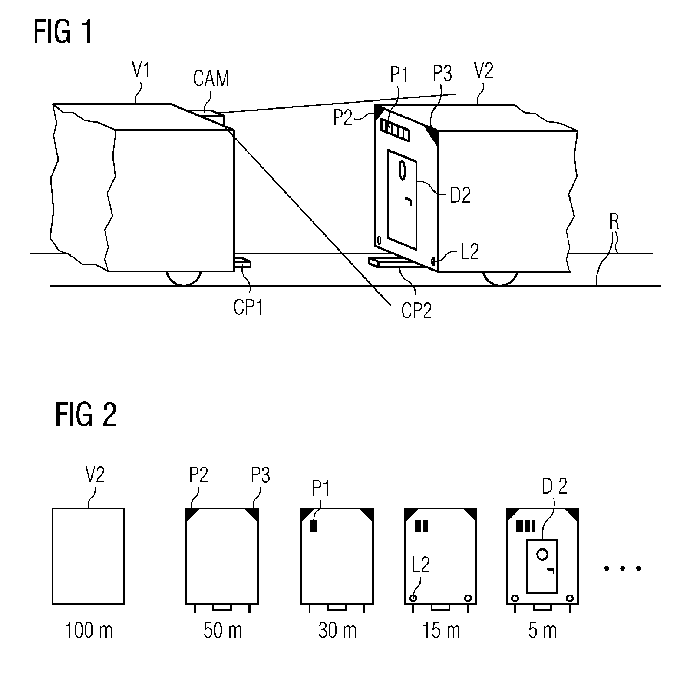

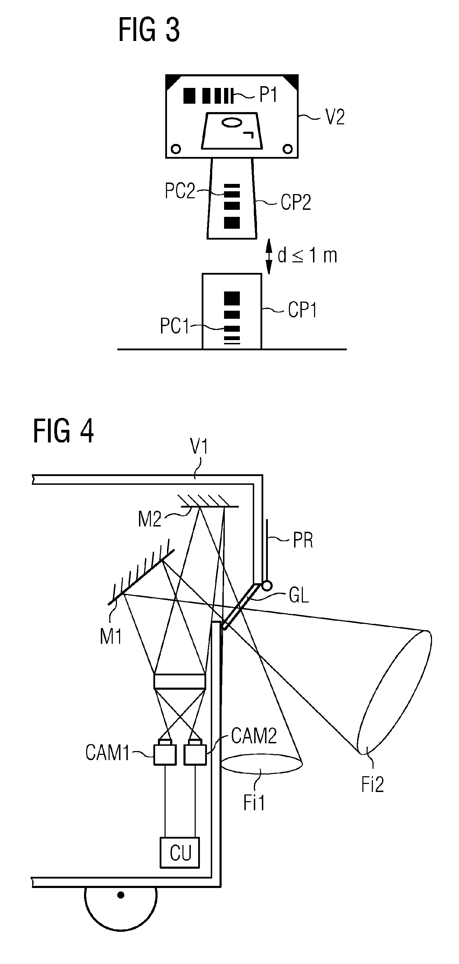

As example DE202006012637U1 presents a device comprising emitting/reflecting means respectively on the front of one vehicle and on the rear of a second vehicle for measuring a vehicle inter-distance. Another device of detecting an approach for ensuring a coupling of vehicles is presented within US20100148013A1 in that sensors (based on contact detection, optical detection like a camera with computer vision of coupling parts/status "open/close", inductive measurement, etc.) are placed at the front of one vehicle and on the rear of a second vehicle. Finally a further document JP2000146573A discloses in figure 2 an optical means for evaluating a distance by determining the size of two imaged patterns and in figure 4 an optical means for evaluating a distance by determining the shifting distance between two imaged patterns.

One general goal underlying to be achieved over this invention is to be seen in providing an apparatus for measuring a distance between two public transport vehicles able to be mechanically coupled or uncoupled, said apparatus improving processes of coupling/uncoupling in that it guaranties a high secure level of these processes.

More particularly said proposed apparatus should provide a simple installation's concept in that it should make use of actual video means which are presently and commonly installed on-board (inside/outside) of public transport vehicles, especially for passenger/obstacle survey's purposes.

Such a goal is achieved by an apparatus for measuring a distance between a first and a second public transport vehicles able to be mechanically coupled or uncoupled such that:
- at least a front section of said first vehicle comprises a video device including at least one camera and a rear section of said second vehicle comprises a pattern arranged to be imaged by said video camera,
- said pattern comprises a plurality of marks whose imaged geometrical features are changing by varying distance between both vehicles,
- said apparatus comprises a processing unit arranged to detect said changes of said image geometrical features over a first automatically recognition and a second classification of said marks in a sequence of changes that is correlated to distance values,
characterized in that said changes are provided in that a plurality of marks whose geometrical features are so configured that by decreasing distance between both vehicles a greater number of marks are optically resolved by said camera.

An embodiment of said apparatus can be characterized in that said changes are provided/detected over a greater size of imaged marks by decreasing distance between both vehicles. Such an embodiment is redundantly implemented within the processing unit, so that the secure level of said apparatus according to the invention will be as well improved.
Due that a video camera can image a large (transversal/longitudinal) field of view in front of the vehicle, as well small and high distances between the vehicles can be measured. It is a great advantage for securing the detection and the measurement of distance by any sudden approaches of vehicles as well as by far approaches even in some curved or hilled track portions.

In a preferred embodiment said apparatus according to the invention provides that each front and rear sections of both vehicles comprise a pattern and a video camera so that associated processing units can output redundant distance values. By this way all vehicles are symmetrically equipped (front/rear) with the apparatus according to the invention. Hence even if the video camera or other apparatus's component of one vehicle is defect, the apparatus of the other vehicle in approach can output a distance value between both vehicles. This leads to a further protection issue that improves the secure level of a coupling/uncoupling. Each apparatus and their respective processing units can also communicates e.g. over some on-board communication routers/clients so that their respective outputted distance values can be compared in order to securely confirm the validity of distance measurements.

Said video camera is preferably located at the top of first vehicle section in order to image coupling means of the first and second vehicles as said coupling means of one of the vehicle are located in an area closed to coupling means of the other vehicle. This configuration of the camera that image from up to down permits to image and measures distances within a small range of maximal some meters und under a precision of about one millimeter (and even under the mm). By this way a further advantage of safety is that the camera is not easily reachable for a person with sabotage's intentions.

Additionally said apparatus may foreseen that coupling means of the vehicles comprises at least an additional pattern with marks which is/are imaged and resolved by the camera as previously described for the initial pattern. Such patterns usually provide a plurality of printed marks/lines/forms with different sizes so that the smallest of them will be optically resolved and recognize by the camera for small distances and bigger marks will analogically indicate greater distances. Assuming that each pattern of coupling means of two vehicles are entirely resolved by the camera, that the real size of patterns is known and that the relative location of said patterns on the coupling means is known, the distance between the coupling means (or between the vehicles) can be evaluated in the processing unit.

Said patterns on front/rear section of vehicles or of their coupling means are not the only ones, as said apparatus according to the invention can also provide as well that some of the marks of patterns are intrinsically geometrical features of the front, the rear section and/or the coupling means of vehicles. Due that geometrical and size data of such features over the manufacture of said vehicles are perfectly known, these data can be inputted in the processing unit in order to better recognize them and to further support the metrical evaluation of the distance. Such features like corners, lights, doors, window, etc of a section of vehicle are also very robust features (compared to previously mentioned "printed" patterns) because even if they are altered (over graffiti or other obsolescence's grounds) their contour or surface is still recognizable over appropriated recognition processing method at the processing unit. This very advantageously aspect leads again to strengthen the secure level of recognition and further of measuring the distance.

In order to securely protect said apparatus according to the invention, at least optics and sensors of the video camera are mechanically covered by or encapsulated in open-able protection means - especially against graffiti/water/snow/stones' throw/etc. - that open on a signal request informing on that at least one of both vehicles is ready for moving in the neighbourhood of the other vehicle. These protections means allow to let income light from outside so that the video devices of a vehicle can image features of another vehicle. A further glass window is also securely placed between a cavity comprising the video device and the protections means so that if said means are opened no water or other similar stuff projections penetrates into said cavity.

Said apparatus according to the invention may provide a very large dynamic of distance measurement in that the video camera device can provide at least a first and a second ranges of vision along a track of vehicles, said first range closed to the front area of the vehicle and said second range far to said front area, ideally 1-2m for the first range and respectively 2-100m for the second range. Especially for long distance and if the second vehicle is approaching over a curved track portion, the video camera of the first vehicle can image said second approaching vehicle due to large field of view of video camera device under the second range of vision. A common known/used telemeter couldn't provide such a dynamic, because it sends/receives generally a mono-directional signal that is only appropriated for a straight track between vehicles, that means hence only for short distances in case of a curved track.

A possible realisation of such a dynamical, extended range measurement relies in that the video camera can comprise at least two sensors, each one imaging one of the ranges of vision though e.g. a single glass window on the front of the vehicle. An alternative could be that an optical switch component is provided in order to image the first or the second range on a single video sensor.

Said apparatus according to the invention can comprise self calibrating means of video camera optics and sensors as the camera is imaging a rail portion in front of the vehicle by assuming known the gap between the rails and the height between the camera and the rails. This can be useful if new patterns or new geometrical front/rear sections of vehicles are introduced within a public transport network. Such test of calibration can also inform on a potential deficiency of the apparatus according to the invention and hence secure the reliability of its said measurement.

Said apparatus according to the invention comprises updateable pattern recognition means of imaged data outputted by the camera, especially within the processing unit which can receive updated data according to the numerous usable patterns to be recognized within a public transport network. By augmenting the number of patterns to be recognized in order to deliver the distance value, said apparatus is hence more robust and secure. Furthermore this updating allows adapting very flexibly the measurement of distances between different kind of vehicles and their respective attached patterns.

Always for a purpose of security said pattern recognition means may output alarms by defining appropriated patterns/scenarios and if a said recognized pattern includes an obstacle between vehicles, a lack of visibility, a deficiency of parts or processes during a coupling and uncoupling phase. For example, the processing unit may detect within the imaged changes all features which are differs to changes of a usual sequence of changes, ideally for alerting on an obstacle or on a deficiency of measurement.

Said apparatus according to the invention may comprise an on-board communication device for transmitting video data from the camera to other communication devices or to a wayside control station. In case of a deficient or potentially risky coupling/uncoupling operation it is hence possible to control more securely the situation or the source of deficiency by a remote control.

The apparatus according to the invention may comprise an illumination device which is switch on in case of a lack of visibility of patterns/marks at the video device, e.g. by night or/and fog.

The described methods are further explained by the following examples and drawings, whereby:
- Drawing 1: shows schematically an apparatus according to the invention,
- Drawing 2: shows a video image sequence over a so called "far range of vision" by an approach between vehicles,
- Drawing 3: shows a video image over a so called "small range of vision" by an approach between vehicles,
- Drawing 4: shows a possible video device adapted for imaging two ranges of vision for extending the dynamic of measurement.

Drawing 1 shows an apparatus for measuring a distance between a first and a second public transport vehicles (V1, V2) able to be mechanically coupled or uncoupled along a railway (R). Said apparatus is characterized in that:
- at least a front section of first vehicle comprises a video camera (CAM) and a rear section of second vehicle comprises at least a pattern (P1, P2, P3, L2, D2, CP2...) that is imaged by said video camera,
- said pattern comprises a plurality of marks whose geometrical features are so configured that by decreasing distance between both vehicles a greater number of marks are optically resolved by said camera whose image is outputted in a processing unit (non represented, see drawing 4) for automatically recognizing and classifying said marks in a sequence that is correlated to distance values.

For example the pattern (P1) comprises an array of black and white alternated lines whose gap width decreases along the pattern. For a far approach between vehicles the camera can only resolve a limited number of lines, most of them having a large width. The number of resolved and further recognized lines is directly correlated to the distance to be measured. Such a pattern can be designed for any range of vision/resolution of a common video device and simply printed/put on a front or rear section of vehicle.

Other so called intrinsically patterns are e.g. reflecting or lighting corners (P2, P3), a border frame or other geometrical properties of a door (D2) within the rear section of vehicle (V2), lights (L2), a border frame of the coupling means (CP2) of vehicle (V2), etc. Each of them should be sequentially classified (within the processing unit and for recognition purposes) in order to be correlated in accordance to a resolution ability of video device under a certain distance (or range of distance).

As well some changes of pattern can be detected over size variations of imaged patterns and their marks according to one further embodiment of the invention (see previously "in that said changes are provided/detected over a greater size of imaged marks by decreasing distance between both vehicles").

Drawing 2 shows a video image sequence over a so called "far range of vision" by an approach between at the beginning far vehicles according to drawing 1. By a far distance d (100m) the camera can only resolve the border frame of the rear section of the second vehicle (V2). As the corners (P2, P3) are additionally recognized, the apparatus can evaluate that the distance d is going though 50m. As the first largest line of the array's pattern (P1) is further recognized, the correlated distance of approach is now 30m. By the recognition of two lines of the array's pattern (P1) the distance is further only on 15m. As the frame border of the door and its features are recognized it is sure that the distance is 5m and so on.

Drawing 3 shows a video image over a so called "small range of vision" by an approach between vehicles which are closed together but not yet coupled (e.g. their distance is about 1m). The video device is now preferably imaging from the top of vehicle section onto the bottom parts of said vehicle and a portion of the railway (e.g. 5m). In the image some new pattern data are to be optically resolved and additionally recognized so that for each newly recognized feature of pattern, a new asset on the real distance can be provided. For this range of small distances the first array's pattern (P1) on vehicle (V2) can be used as long as possibly imaged, but the coupling means are also a very adapted solution for providing new pattern features that are correlated to certain distance values between the vehicles (e.g. d = 1m, 50cm, ..., 20cm, 10cm, 5cm, 2cm, 1cm, 5mm, 1mm, 0mm). In order to improve the accuracy of distance measurement, it is recommended that additional patterns (PC1, PC2) like array's pattern are put on the coupling means because even if all of their lines are resolved e.g. until d=50cm, for smaller distance it is also geometrically possible to estimate the real metrical distance between such (known) patterns whose relative position is also known on the coupling means. As well the size of the imaged patterns (PC1, ?C2) or their internal marks can be estimated. Such a size measurement requires some pre-calibration means but it is possible to store such corrective knowledge in the processing unit or it is also possible to use some patterns/marks whose size are definitively known by public transportations, so that a real-time calibration can be provided if some correction of imaging are required/detected. In resume it is possible to evaluate very accurately by means of the processing unit the distances between the vehicles, e.g. until usually an accuracy of 1mm.

Drawing 4 shows a possible video device adapted for imaging two ranges of vision (FI1, FI2) for extending the dynamic of measurement of the apparatus according to the invention. The video device comprises two sensors (like CCD-chip) coupled to the processing unit (CU) that provides a recognition of pattern and outputs a value of measured distance. Only the front part of vehicle (V1) is represented as a side view and comprises a glass window (GL) with a open-able protection door (PR) that rotates up and down for opening or not the path of lights though the glass window. By opened protection door the imaging optics of each sensor is configured for allowing an imaging of both ranges of vision (that means for short distance resp. far distance measurements) over the single glass window. This can be provided by a couple of mirrors M1, M2 in order to keep the video device as compact as possible. By this way the glass window may be also very small so that the open-able protection door has also a very small size like a simple hole which is simple to open and close even by other means that a rotating door. Such a configuration allows to have only one single opening in the front section for simultaneously imaging both fields/ranges of vision, that means both sensors can work in parallel and the apparatus according to the invention makes permanently and securely benefit of a maximal dynamics of measurement.

## Claims

1. Apparatus for measuring a distance between a first and a second public transport vehicles (V1, V2) able to be mechanically coupled or uncoupled such
- at least a front section of said first vehicle comprises a video device including at least one camera (CAM) and a rear section of said second vehicle comprises a pattern (P1, P2, P3, L2, D2, CP2...) arranged to be imaged by said video camera,
- said pattern comprises a plurality of marks whose imaged geometrical features are changing by varying distance between both vehicles,
- said apparatus comprises a processing unit (CU) arranged to detect said changes of said image geometrical features over a first automatically recognition and a second classification of said marks in a sequence of changes that is correlated to distance values
**characterised in that** said changes are provided **in that** a plurality of marks whose geometrical features are so configured that by decreasing distance between both vehicles a greater number of marks are optically resolved by said camera.

2. Apparatus according to claim 1, wherein said changes are provided over a greater size of imaged marks by decreasing distance between both vehicles.

3. Apparatus according to one of claims 1 to 2, wherein each front and rear sections of both vehicles comprise a pattern and a video camera so that associated processing units outputs redundant distance values.

4. Apparatus according to one of claims 1 to 3, wherein said video camera is located at the top of first vehicle section in order to image coupling means (CP1, CP2) of the first and second vehicles as said coupling means of one of the vehicle are located in an area closed to coupling means of the other vehicle.

5. Apparatus according to claim 4, wherein coupling means comprises an additional pattern (PC1, PC2) with marks which is imaged by the camera.

6. Apparatus according to one of the previous claims 1-5, wherein some of the marks are intrinsically geometrical features of the front, the rear section and the coupling means of vehicles.

7. Apparatus according to one of the previous claims 1-6, wherein optics and sensors of the video camera are mechanically covered by protection means (PR) - especially against graffiti - that open on a signal request informing on that at least one of both vehicles is ready for moving in the neighbourhood of the other vehicle.

8. Apparatus according to one of the previous claims 1-7, wherein the video camera provides at least a first and a second ranges of vision (FI1, FI2) along a track (R) of vehicle, said first range closed to the front area of the vehicle and said second one far to said front area, ideally 1-2m respectively 2-100m.

9. Apparatus according to claim 8, comprising the video camera comprises at least two sensors (CAM1, CAM2), each one imaging one of the ranges of vision though a single glass window (GL) on the front of the vehicle.

10. Apparatus according to one of the previous claims 1-10, comprising self calibrating means of camera optics and sensors as the camera is imaging a rail portion in front of the vehicle by assuming known the gap between the rails (R) and the height between the camera and the rails.

11. Apparatus according to one of the previous claims 1-10, comprising pattern recognition means of imaged data outputted by the camera.

12. Apparatus according to claim 11, wherein the pattern recognition means outputs alarms if said recognized pattern includes an obstacle between vehicles, a lack of visibility, a deficiency of parts or processes during a coupling and uncoupling phase.

13. Apparatus according to one of the previous claims 1-12, comprising an on-board communication device for transmitting video data from the camera to other communication devices or to a wayside control station.

14. Apparatus according to one of the previous claims 1-13, wherein the processing unit detects within the imaged changes all features which are differs to changes of a usual sequence of changes, ideally for alerting on an obstacle or on a deficiency of measurement.

15. Apparatus according to one of the previous claims 1-14, comprising an illumination device which is switch on in case of a lack of visibility of patterns/marks at the video device, e.g. by night or/and fog.

## Patentansprüche

1. Vorrichtung zum Messen einer Entfernung zwischen einem ersten und einem zweiten öffentlichen Transportfahrzeug (V1, V2), die sich mechanisch aneinander ankoppeln oder voneinander abkoppeln lassen, wobei:
- zumindest ein vorderes Teilstück des ersten Fahrzeugs eine Videoeinrichtung mit mindestens einer Kamera (CAM) und ein hinteres Teilstück des zweiten Fahrzeugs ein Muster (P1, P2, P3, L2, D2, CP2...) umfasst, das so angeordnet ist, dass es von der Videokamera abgebildet wird,
- das Muster mehrere Markierungen umfasst, deren abgebildete geometrische Merkmale sich bei sich verändernder Entfernung zwischen beiden Fahrzeugen ändern,
- die Vorrichtung eine Verarbeitungseinheit (CU) umfasst, die so ausgelegt ist, dass sie die Änderungen der abgebildeten geometrischen Merkmale zunächst durch eine automatische Erkennung und dann durch eine Klassifizierung der Markierungen in einer Reihenfolge von Änderungen erfasst, die mit Entfernungswerten korreliert,
**dadurch gekennzeichnet, dass**
die Änderungen durch mehrere Markierungen bereitgestellt werden, deren geometrische Merkmale so konfiguriert sind, dass bei Verringern der Entfernung zwischen beiden Fahrzeugen eine größere Anzahl Markierungen von der Kamera optisch aufgelöst werden.

2. Vorrichtung nach Anspruch 1, bei der die Änderungen über eine größere Größe der abgebildeten Markierungen bei Verringern der Entfernung zwischen beiden Fahrzeugen bereitgestellt werden.

3. Vorrichtung nach einem der Ansprüche 1 bis 2, bei der jedes vordere und hintere Teilstück beider Fahrzeuge ein Muster und eine Videokamera umfasst, so dass zugehörige Verarbeitungseinheiten redundante Entfernungswerte ausgeben.

4. Vorrichtung nach einem der Ansprüche 1 bis 3, bei der sich die Videokamera oben am ersten Fahrzeugteilstück befindet, damit sie Kupplungmittel (CP1, CP2) des ersten und des zweiten Fahrzeugs abbildet, wenn sich die Kupplungsmittel des einen Fahrzeugs in einer Region in der Nähe der Kupplungsmittel des anderen Fahrzeugs befinden.

5. Vorrichtung nach Anspruch 4, bei der die Kupplungsmittel ein zusätzliches Muster (PC1, PC2) mit Markierungen umfassen, das von der Kamera abgebildet wird.

6. Vorrichtung nach einem der vorhergehenden Ansprüche 1 bis 5, bei der einige der Markierungen spezifische geometrische Merkmale des vorderen Teilstücks, des hinteren Teilstücks und der Kupplungsmittel von Fahrzeugen sind.

7. Vorrichtung nach einem der vorhergehenden Ansprüche 1 bis 6, bei der Optik und Sensoren der Videokamera mechanisch mit Schutzmitteln (PR) - insbesondere gegen Graffiti - abgedeckt sind, die sich auf ein Anforderungssignal hin öffnen, welches darüber informiert, dass zumindest eines der beiden Fahrzeuge für das Fahren in die Umgebung des anderen Fahrzeugs bereitsteht.

8. Vorrichtung nach einem der vorhergehenden Ansprüche 1 bis 7, bei dem die Videokamera mindestens einen ersten und einen zweiten Sichtbereich (FI1, FI2) auf einer Strecke (R) eines Fahrzeugs bereitstellt, wobei der erste Bereich in der Nähe der vorderen Region des Fahrzeugs und der zweite Bereich idealerweise 1 bis 2 m beziehungsweise 2 bis 100 m von der vorderen Region entfernt liegt.

9. Vorrichtung nach Anspruch 8, die die Videokamera umfasst, welche mindestens zwei Sensoren (CAM1, CAM2) umfasst, die jeweils einen der Sichtbereiche durch ein einfaches Glasfenster (GL) auf der Vorderseite des Fahrzeugs abbilden.

10. Vorrichtung nach einem der vorhergehenden Ansprüche 1 bis 10, die Selbstkalibrierungsmittel für Optik und Sensoren der Kamera umfasst, da die Kamera einen Schienenabschnitt vor dem Fahrzeug abbildet, indem davon ausgegangen wird, dass der Abstand zwischen den Schienen (R) und die Höhe zwischen der Kamera und den Schienen bekannt ist.

11. Vorrichtung nach einem der vorhergehenden Ansprüche 1 bis 10, die ein Mustererkennungsmittel für von der Kamera ausgegebene Bilddaten umfasst.

12. Vorrichtung nach Anspruch 11, bei der das Mustererkennungsmittel Warnmeldungen ausgibt, wenn das erkannte Muster ein Hindernis zwischen Fahrzeugen, Sichteinschränkungen, fehlende Teile oder Vorgänge bei einer An- und Abkoppelphase umfasst.

13. Vorrichtung nach einem der vorhergehenden Ansprüche 1 bis 12, die eine bordeigene Kommunikationseinrichtung zum Übertragen von Videodaten von der Kamera zu anderen Kommunikationseinrichtungen oder zu einer Streckenleitstelle umfasst.

14. Vorrichtung nach einem der vorhergehenden Ansprüche 1 bis 13, bei der die Verarbeitungseinheit in den abgebildeten Änderungen alle Merkmale erfasst, die sich von Änderungen in einer üblichen Reihenfolge von Änderungen unterscheiden, idealerweise zwecks Warnung vor einem Hindernis oder bei Fehlen einer Messung.

15. Vorrichtung nach einem der vorhergehenden Ansprüche 1 bis 14, die eine Beleuchtungseinrichtung umfasst, welche bei fehlender Sichtbarkeit von Mustern/ Markierungen an der Videoeinrichtung, z.B. bei Nacht oder/ und Nebel, eingeschaltet wird.

## Revendications

1. Appareil pour mesurer une distance entre un premier et un second véhicules de transport en commun (V1, V2) pouvant être couplés ou découplés mécaniquement de sorte que:
- au moins une partie avant dudit premier véhicule comporte un dispositif vidéo comprenant au moins une caméra (CAM) et une partie arrière dudit second véhicule comprend un motif (P1, P2, P3, L2, D2, CP2, ...) conçu pour être imagé par ladite caméra vidéo,
- ledit motif comprend une pluralité de marques dont les caractéristiques géométriques imagées changent en faisant varier la distance entre les deux véhicules,
- ledit appareil comprend une unité de traitement (CU) conçue pour détecter lesdits changements desdites caractéristiques géométriques d'images sur une première reconnaissance automatique et une seconde classification desdites marques dans une séquence de changements qui est mise en corrélation avec les valeurs de distance,
**caractérisé en ce que**
lesdits changements sont fournis dans une pluralité de marques dont les caractéristiques géométriques sont configurées de sorte que, en diminuant la distance entre les deux véhicules, un plus grand nombre de marques sont résolues optiquement par ladite caméra.

2. Appareil selon la revendication 1, dans lequel lesdits changements sont fournis sur une plus grande taille de marques imagées en diminuant la distance entre les deux véhicules.

3. Appareil selon l'une des revendications 1 à 2, dans lequel chacune des parties avant et arrière des deux véhicules comprend un motif et une caméra vidéo de sorte que les unités de traitement associées délivrent en sortie des valeurs de distance redondantes.

4. Appareil selon l'une des revendications 1 à 3, dans lequel ladite caméra vidéo est située au-dessus de la partie du premier véhicule afin d'imager des moyens d'accouplement (CP1, CP2) des premier et second véhicules lorsque lesdits moyens d'accouplement de l'un des véhicules sont situés dans une zone fermée aux moyens d'accouplement de l'autre véhicule.

5. Appareil selon la revendication 4, dans lequel les moyens d'accouplement comportent un motif supplémentaire (PC1, PC2) avec des marques qui est imagé par la caméra.

6. Appareil selon l'une quelconque des revendications précédentes 1 à 5, dans lequel certaines des marques sont intrinsèquement des caractéristiques géométriques de la partie avant, de la partie arrière et des moyens d'accouplement de véhicules.

7. Appareil selon l'une quelconque des revendications précédentes 1 à 6, dans lequel des unités optiques et des capteurs de la caméra vidéo sont mécaniquement recouverts par des moyens de protection (PR) - en particulier contre les graffitis - qui s'ouvrent sur une demande de signal informant sur ce qu'au moins l'un des deux véhicules est prêt pour le déplacement dans le voisinage de l'autre véhicule.

8. Appareil selon l'une des revendications précédentes 1 à 7, dans lequel la caméra vidéo fournit au moins une première et une seconde plages de vision (FI1, FI2) le long d'une voie (R) du véhicule, ladite première plage fermée dans la partie avant du véhicule et ladite seconde plage éloignée de ladite zone avant, idéalement de 1 à 2 m respectivement de 2 à 100 m.

9. Appareil selon la revendication 8, comprenant la caméra vidéo comportant au moins deux capteurs (CAM1, CAM2), chacun d'entre eux imageant l'une des plages de vision à travers une fenêtre de verre simple (GL) sur l'avant du véhicule.

10. Appareil selon l'une des revendications précédentes 1 à 10, comprenant des moyens de calibrage automatique d'unités optiques et de capteurs de caméra lorsque la caméra image une partie de rail à l'avant du véhicule en supposant connu l'écart entre les rails (R) et la hauteur entre la caméra et les rails.

11. Appareil selon l'une quelconque des revendications 1 à 10, comprenant des moyens de reconnaissance de motif de données imagées délivrées en sortie par la caméra.

12. Appareil selon la revendication 11, dans lequel les moyens de reconnaissance de motif délivrent en sortie des alarmes si ledit motif reconnu comprend un obstacle entre des véhicules, un manque de visibilité, une déficience de pièces ou de processus au cours d'une phase de couplage et de découplage.

13. Appareil selon l'une des revendications précédentes 1 à 12, comprenant un dispositif de communication embarqué pour transmettre des données vidéo en provenance de la caméra vers d'autres dispositifs de communication ou à un poste de commande en bordure de voie.

14. Appareil selon l'une des revendications précédentes 1 à 13, dans lequel l'unité de traitement détecte au sein des changements imagés toutes les caractéristiques qui diffèrent de changements d'une séquence habituelle de changements, idéalement pour alerter sur un obstacle ou sur une déficience d'une mesure.

15. Appareil selon l'une quelconque des revendications précédentes 1 à 14, comprenant un dispositif d'éclairage qui est allumé en cas de manque de visibilité de motifs/marques sur le dispositif vidéo, par exemple de nuit et/ou en cas de brouillard.
